# EUROPEAN PATENT SPECIFICATION

(11) **EP 1 964 794 B1**
(45) Date of publication and mention of the grant of the patent: **02.11.2016**
(21) Application number: 08151833.4
(22) Date of filing: 22.02.2008
(51) Int. Cl.: B65G 45/22, B65G 45/24, B65G 45/26, B05B 15/04

(54) **Device for cleaning from a conveyor belt, driven on rollers, fluid substances sprayed thereon**
Vorrichtung zum Reinigen eines Transportbandes
Dispositif pour le nettoyage d'une bande transporteuse

(30) Priority: 27.02.2007 IT BO20070125
(43) Date of publication of application: 03.09.2008
(60) Divisional application: 16189500.8
(73) Proprietor: CEFLA SOCIETA' COOPERATIVA, 40026 Imola (BO) (IT)
(72) Inventor: Dovadola, Massimo, 48012 Bagnacavallo, Province of Ravenna (IT); Franzoni, Luigi, 40026 Imola (IT)
(74) Representative: Porsia, Attilio

(56) References cited:
- EP-A1- 1 059 249
- EP-A2- 1 348 488

## Description

The invention concerns a device for cleaning externally a conveyor belt soiled with a fluid substance, said belt being endlessly wound and driven around at least two end rollers, at least one of which is motor-driven. In particular the device is intended to clean the conveyor belts of machines and plants for painting, dyeing or impregnating processes, referred to below in short and for the sake of simplicity as "painting machines", which convey the articles to be treated through a chamber for spraying the fluid treatment substance, such as paint for example. The conveyor belt is formed by two sections: an upper outward section, on which the articles to be treated are usually rested, said articles, when they pass through the spraying chamber, being coated with the paint spray, and a lower return section, which is situated outside the said spraying chamber and which, after leaving this chamber, is soiled with paint which must be recovered while the conveying section itself must be cleaned before returning to the upper level in order to receive the new articles to be treated.

The devices currently used to recover the residual paint and clean the belt comprise means for removing the paint from the belt by means of a shaving or scraping operation and comprise cleaning systems which wet the belt with solvent and then dry and clean it, for example using fixed doctor blades or rotating cylinders or a combination of these means.

In European patent EP 425969 in the name of the Applicant, the cleaning device comprises a steel cylinder or roller with a perfectly smooth surface, which acts on the return section of the conveyor with a parallel arrangement for example facing the end drive roller of the said conveyor and this steel roller is made to rotate in the opposite direction to the direction of feeding of the belt to be cleaned, so as to perform effective shaving-off of the residual paint which is detached from this roller by cleaning means and collected in a recovery hopper. The said counter-rotating cleaning roller, also called a reverse roller, is partially immersed with a bottom portion thereof inside a solvent-containing tank so as to be cleaned entirely or partly and convey a film of the said solvent or solvent and paint into the zone of contact with the lower section of the belt to be cleaned, in order to wet the belt zone from which the paint is removed and ensure that the said conveyor section leaves the reverse roller partly with solvent and partly with any paint, this having the function of softening further the residual paint which can thus be easily removed by the following cleaning means comprising a further reverse roller and/or fixed doctor blades and/or rotating brushes and any other suitable means.

This reverse roller cleaning system has, over time, proved to be very valid and advantageous, but has limitations due to the considerable distance of the solvent tank from the belt to be cleaned, so that there is a considerable dispersion in the external environment of solvent vapours from the said tank inside which the reverse roller is immersed at the bottom and from the surface section of the said reverse roller which emerges from said tank with the solvent and which rotates upwards so as to scrape the bottom section, to be cleaned, of the said conveyor of the painting machine.

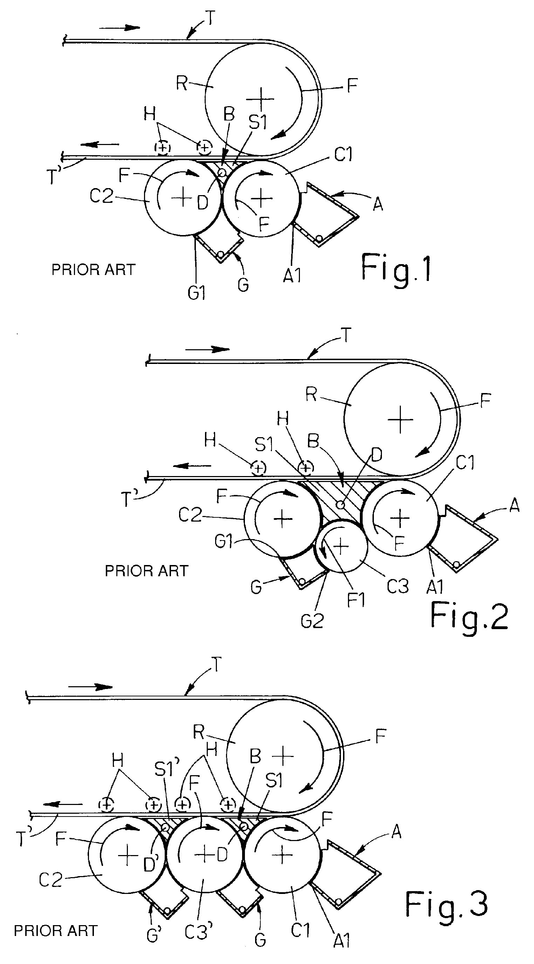

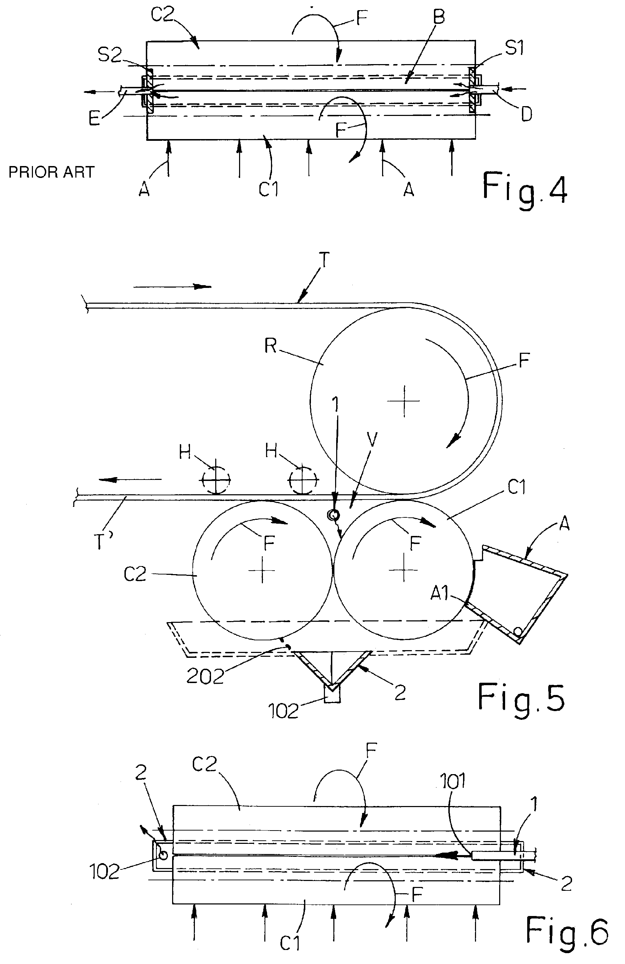

These limitations were overcome with the solution described in European patent EP 1,136,399 and associated patents in the same family, which is briefly summarised here with reference to Figures 1, 2 and 3 which show corresponding different embodiments of this innovative solution and with reference to Figure 4 which shows a top plan view of the further details of the solution according to Figure 1. In Figures 1 and 4, T denotes the conveyor belt of the painting machine and R denotes the end drive roller of this conveyor which rotates in the direction of the arrow F. C1 denotes the reverse roller or cylinder which also rotates in the direction F of the said roller R and which co-operates with the portion of the lower section T' of the conveyor T supported by the said roller R and/or by other following suitable means so that, as a result of the opposite movement in the zone of contact between the belt section T' and roller C1, this reverse roller removes the paint from the belt section T', which is then preferably removed from the same roller C1 by any suitable scraping means, for example by a static scraping surface A1 which is for example associated with a hopper A for collection and removal of this recovered paint. Downstream of the reverse roller C1 a second reverse roller C2 operates in substantial contact therewith, which second roller also rotates in the direction of the arrow F and may be made of steel or lined with materials suitable for cleaning the conveyor T, for example with cloth or fabric, the interference between the rollers C1 and C2 being such that, in the zone of substantial mutual contact, there is no wear of the weaker surface of the two rollers and so that these rollers are able to rotate freely.

The ends of the space B situated above the zone of mutual contact of the rollers C1 and C2 are closed by shoulders S1 and S2 which are made of a suitable plastic and co-operate with the ends of the said rollers C1, C2 and which at the top are situated at a short distance from the lower section T' of the conveyor T so that the said space B is confined from the external environment and forms an actual tank inside which solvent may be continuously introduced, for example via at least one supply pipe D which passes, for example, through the end shoulder S1, while the opposite shoulder S2 is provided with at least one pipe E for discharging the paint recovered by the second reverse roller C2. The solvent tank now formed inside the space B replaces the previous tank inside which the bottom part of the first reverse roller C1 was immersed, with obvious advantages in terms of a smaller dispersion of the solvent vapours in the external environment. Part of the solvent situated inside the tank B wets the ascending surface of the roller C1 and is deposited on the lower section T' of the conveyor T so as to wet the paint removed by this roller and lubricate suitably the surfaces of the parts C1 and T' which make scraping contact with each other. Part of the solvent remains on the lower section T' of the conveyor T and softens the residual paint which is then removed by the second roller C2 which is cleaned during contact with the solvent inside the tank B. G denotes a hopper which collects the small stream of solvent which trickles down from the zone of mutual contact of the rollers C1, C2 and from the end shoulders S1, S2 and which with its edge G1 may if necessary clean the roller C2 and/or limit the quantity of solvent which this rollers conveys upwards for further wetting of the lower section T' of the conveyor T, in order to soften any further residual paint which may then be removed by further cleaning means, such as doctor blades, brushes, cloth pads and/or other suitable means.

The second solution, also known and shown in Figure 2, envisages that the reverse rollers C1 and C2 are spaced from each other and that a third roller C3 operates in contact between them, said third roller rotating in a direction F1 opposite to the direction F of the adjacent rollers and at the same peripheral speed so as to close sealingly the solvent tank B at the bottom, preventing frictional contact between the said rollers. At least one hopper G is provided underneath the last two rollers C2, C3 and with its suitably designed edges G1 and G2 is able to scrape the said rollers C2, C3 so as to clean them. The shoulders S1 and S2 which close the ends of the tank for the solvent supplied by the pipe D and discharged by opposite means are now arranged such that they act on the ends of the set of three rollers C1, C2, C3. The middle roller C3 is also supported by the same side walls of the frame which rotatably supports the ends of the rollers C1, C2 and is also connected to suitable rotational means.

The third solution, which is also known and shown in Figure 3, teaches that the middle roller C3' may be at a height such as to touch also the lower section T' of the conveyor of the painting machine, this roller being able to rotate in the same direction F1 as the roller C3 in the solution according to Figure 2, so as to supply solvent directly onto the section T', or being able to rotate in the same direction F as the other two rollers so as to act with a reverse action on the section T' to be cleaned. It is clear how this solution is substantially a duplicate of the solution according to Figure 1, with pairs of shoulders S1, S2 and S1', S2' between the consecutive rollers and with corresponding recovery hoppers G, G' underneath the said pairs of consecutive rollers. D and D' denote the pipes for supplying the solvent into the tanks formed by the set of three reverse rollers, by the overlying section T' of the conveyor T and by the said pairs of end shoulders S1, S2 and S1', S2'. In the solution according to Figure 3 also, the middle roller C3' is rotatably supported by the frame which carries the rollers C1 and C2 and, in the same way as these rollers, is actuated by suitable rotational means.

The invention intends simplifying the constructional design of a cleaning device such as that of the abovementioned solutions, with a novel device which combines the advantages of the solutions according to Figures 1 and 3, i.e. that of providing solvent tanks with a small depth and set very high up and close to the section T' of the belt to be cleaned, with the advantages of the solution according to Figure 2, i.e. that of dynamic and revolving closure of the successive reverse rollers by a middle roller, without, however, the constructional complexity and shortcomings of this second solution, the former relating to the support and to the drive system of the said middle roller and the latter relating to the large depth of the solvent tank.

The novel solution, as summarized in Claim 1 and the subsequent dependent claims, envisages that there is a small distance between the consecutive reverse rollers, such that the shaving contact between these rollers according to the known solution of Figure 1 does not occur and, when the paint employed uses solvent which evaporates easily, envisages the arrangement, between the said reverse rollers, of a floating parallel roller, also of small diameter, which rests on the consecutive reverse rollers situated at a small distance from each other, so as to be supported by them, and which is made to rotate by them, without the need for supports and a drive system at the ends, as is instead the case in the prior art. If necessary, it is possible to remove this middle roller and gain full access to the reverse rollers for any ordinary and extraordinary maintenance needs. For applications involving paints or other products which use water and other low-volatility liquids as the solvent, the said middle roller may not be necessary since a recovery tank is in any case present underneath the reverse rollers.

Another shortcoming of the known solutions consists in the complexity of the constructional design and mounting of the closing shoulders on the ends of the solvent tank, said mounting on occasions being problematic when the reverse roller is lined with cloth or fabric in order to ensure vigorous and effective cleaning of the belt T'. Since, even with the presence of the said shoulders S1, S2, closing of the ends of the solvent tank can never be performed in perfectly sealed conditions, so that drops of solvent inevitably fall from the ends of the upper tank and since the said solvent tank may be formed with a limited depth, it has been established that the said shoulders may be eliminated and that it is possible to obtain good results as regards operation of the cleaning apparatus by introducing the solvent between the rollers at a suitable distance from at least one or both their ends, so that the solvent also wets the middle parts of these rollers and then flows by means of gravity and as a result of rotation of the said rollers, towards the ends of the latter, passing over their entire axial length.

These and other characteristic features of the invention will appear more clearly from the following description of a preferred embodiment thereof, provided purely by way of a non-limiting example, in the further figures of the accompanying sets of drawings where, in addition to Figures 1 to 4, already considered:
- Fig. 5 shows a side elevation view, with parts cross-sectioned, of the device according to Figure 1, but without the side shoulders for retaining the solvent inside the upper tank;
- Fig. 6 shows a top plan view of the solution according to Figure 5;
- Fig. 7 shows a side elevation view, with parts cross-sectioned, of the cleaning device with a floating roller driven between the two successive reverse rollers;
- Fig. 8 shows a top plan view of the further details of the solution according to Figure 7;
- Fig. 9 shows a perspective view of a constructional variant of the solution according to Figures 7 and 8;
- Fig. 10 shows other details of the variant according to Figure 9 cross-sectioned along the line X-X;
- Fig. 11 shows, laterally and with parts cross-sectioned, a further constructional variant of the cleaning device, equivalent to that of Figure 7, with the upper solvent-tank formed by a reverse roller and by a doctor blade.

The solution according to Figure 5 corresponds to the known solution according to Figure 1 which make use of two successive reverse rollers C1 and C2 which are placed in contact with the lower section T' of the conveyor belt T to be cleaned and for example are positioned substantially in mutual contact or at a short distance from each other (see below), so as to form between them a tank V inside which solvent is supplied (see below), at least the main reverse roller C1 being cleaned by the scraper means (A1) of a respective hopper A or by any other suitable means known and suitable for the purpose, also means of the dynamic type. H denotes known opposition means consisting, for example, of rollers or runners which are situated upstream and downstream of the roller C2, as shown in Figure 5, or in direct opposition to the said roller C2, so as to keep the lower section T' of the conveyor T co-operating with a suitable degree of pressure with the second reverse roller C2 which is unable to rely on the presence of the drive roller R.

According to the innovation in question, the upper tank V may not have one or both the end shoulders S1 and S2 according to the aforementioned known art and the solvent may be introduced inside this tank via at least one end thereof, for example by at least one pipe 1 (Figs. 5, 6) which terminates with its supplying end 101 at a distance from the side of the set of rollers, sufficient to ensure that, also owing to the pressure of the solvent emitted from the said pipe, the solvent manages to wet a middle part of the tank V and the rollers C1, C2 which define it, so that the solvent itself is caused, by the said force of expulsion from the pipe 101, the rotation of these rollers and the linearity of the generatrices of their surfaces and therefore also the force of gravity, to pass over the entire axial length of the rollers, following which the said solvent flows out from the ends of the tank V and is collected by a hopper 2 and/or by other suitable collection means, such as slides, which form overall a system with a length suitably greater than the axial length of the cleaning rollers, which projects with suitable end sections from the said rollers C1, C2 so as to be able to collect properly all the liquid which falls from these cleaning rollers C1, C2. The hopper 2 may be such as to extend partly also underneath the main roller C1 and to a greater degree underneath the roller C2, as shown in broken lines in Figure 5 and may be structured so as to slope with its bottom wall which will have in at least one lower point at least one discharge mouth or duct 102 which will be situated in the middle and/or at the end and from which the liquid will be discharged so that it can be conveyed away and re-circulated by suitable means (see below).

It is understood that the following constructional variants may fall within the scope of the invention:
a) the solvent may be introduced via both the ends of the tank V by respective pipes of the same type as that indicated by 1;
b) the reverse roller C1 may be without the scraping means A1 and the hopper A since the action of cleaning this roller could be performed by the following roller C2
which could in turn be provided with scraping means 202 for detaching the paint and causing it to fall into the hopper 2 from where it would be removed by the solvent which falls from the upper tank V.

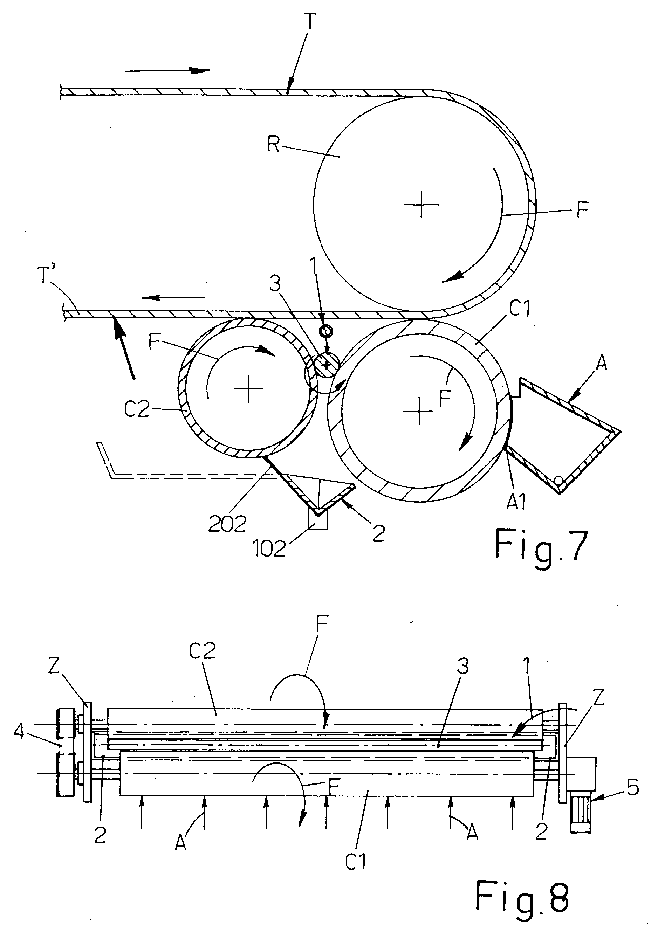

In combination with or without the improvements considered above, the invention intends to protect the solution which is now described with reference to Figure 7, according to which the consecutive cleaning rollers C1 and C2 do not touch each other so as not to rub and cause corresponding wear. These rollers are positioned at a short distance from each other, also at a distance much smaller than that shown in Figure 7, and between them a roller 3 is rested, said roller being "floating" in the sense that it is freely independent and supported by the said rollers C1 and C2 which rotate in the same direction F and at a suitable peripheral speed so that this roller 3 is able to able to rotate about itself as a result of the tangential thrust which is transmitted to it by the rollers C1 and C2 and so that the same middle roller 3 forms a substantial dynamic closure of the space which is situated between the reverse rollers C1 and C2. As shown in Figure 8, the roller C2 has preferably an axial length greater than that of the roller C1 and the floating roller has an axial length the same as or slightly greater than that of the second roller C2 and its ends are suitably spaced from the side walls Z which rotatably support the axes of the rollers C1, C2 which are interconnected by a drive 4 which causes them to rotate at a suitable peripheral speed and in the same direction F, while one of these rollers, for example the roller C1 is actuated by a suitable drive unit 5.

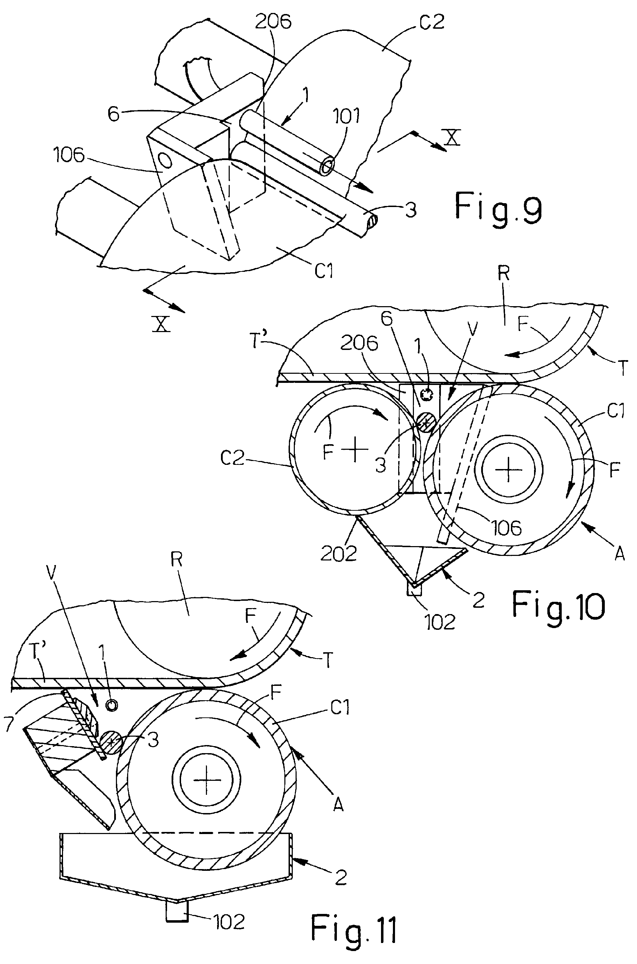

The variant according to Figures 9 and 10 teaches that said side walls Z may have, fixed thereto, bodies 6 which are for example made of suitable plastic or other material with a low coefficient of friction and which may co-operate with the ends of the floating roller 3 so as to limit the axial movements thereof and keep it sufficiently centred between the rollers C1, C2. These bodies may if necessary form the transverse part of gutters which have, in plan view, a U-shaped form and which with their flanges 106 and 206 may co-operate with the ends of the reverse rollers C1, C2, so as to channel towards the hopper 2 the liquid flowing out from the ends of the tank V.

The scope of the invention also embraces the variant whereby, in particular in applications involving paints which use as solvent water or other liquids with a low volatility, the said middle roller 3 may not be used, since the liquid which falls between the reverse rollers C1, C2 may be readily collected and recovered by the tank 2 to which the comments made above with reference to Figure 5 are applicable.

The scope of the invention also embraces the solution according to Figure 11, which shows the improvement according to the prior solution described in the abovementioned patent EP 1,136,399, whereby the upper solvent-containing tank is formed by a reverse roller C1 and by a doctor blade 7. According to the solution of Figure 11, the tank V may be open at the ends, in region of at least one of which at least one pipe 1 for introducing the solvent is arranged, while the doctor blade 7 may also be in contact with the reverse roller C1, or may be slightly spaced from the latter or may be sufficiently spaced from this roller C1, and a floating roller 3 may be arranged between the two parts as in the solutions considered above. In this case also, bodies 6 for limiting the axial movements of the floating roller 3 and keeping it sufficiently centred between the parts C1 and 7 may also be provided at the ends of the device.

## Claims

1. Device for cleaning from a conveyor belt (T), driven on rollers, fluid substances sprayed onto it, in particular from the lower return section (T') of the conveyor belts (T) of machines and/or plants for painting, dyeing or impregnating processes, referred to below briefly as "painting machines", said device being of the type which comprises at least two successive reverse rollers (C1, C2) which rotate in the same direction (F) so as to scrape, by means of an opposing movement, the said lower section (T') of the conveyor (T) to be cleaned, or which comprises at least one reverse roller (C1) and at least one following doctor blade (7), which are arranged so as to form between them an upper tank (V), and which comprises means for introducing (1) a suitable quantity of cleaning solvent into this upper tank (C), which comprises means for limiting the immediate discharging of the said solvent from the said tank (V) so that the said reverse roller or rollers are wetted by the solvent over their entire axial length and which comprises underneath the said means one or more hoppers (2) for recovering the paint removed by them and the said cleaning solvent, wherein said upper tank (V) is slightly open in the bottom part, so that the parts which form it, in particular if they consist of reverse rollers (C1, C2), do not have to operate together with sliding friction, and wherein said device comprises underneath the said tank (V) at least one hopper (2) with a form and length such as to collect the solvent which falls from the end or the ends of this upper tank (V) and the solvent which passes between the said cleaning means (C1, C2 or C1, 7) and this hopper being provided with an internal form such as to discharge the collected material through at least one discharge mouth or duct (102), **characterized in that** at least one floating roller (3), which is supported and made to rotate by the parts which form the said tank, namely by the two reverse rollers (C1, C2) or by the reverse roller (C1) and by the said doctor blade (7), is arranged in the bottom of said upper tank, all of which so that this floating roller (3) vertically closes the longitudinal bottom discharge outlet of the said tank (V) which in this way may have a limited depth, the cleaning solvent being supplied into this tank by special means and then discharged from one or both the ends of the said tank (V).

2. Device according to claim 1, **characterized in that** it may comprise fixed bodies (6) for example made of suitable plastic or other material with a low coefficient of friction, for limiting the axial movements of the said floating roller (3) so that the latter remains sufficiently centred between the reverse rollers (C1, C2) or between the reverse roller (C1) and the doctor blade (7).

3. Device according to Claim 2, **characterized in that** the said fixed bodies (6) may, if necessary, form the transverse part of gutters which in plan view have a substantially U-shaped form and which with their flanges (106 and 206) may co-operate with the ends of the reverse rollers (C1, C2) or the reverse roller (C1) and the doctor blade (7), in order to channel towards the said bottom hopper (2) the liquid which flows out from the ends of the upper tank (V).

4. Device according to one or more of the preceding claims, **characterized in that** the said solvent tank (V) is open at at least one or both the ends and that the solvent is introduced via at least one or both the ends of this tank by means of at least one pipe (1) or other suitable means which discharges the solvent in one or more positions sufficiently distant from the ends of the said tank so that the solvent itself manages to wet an intermediate space of the widthwise extension of the said cleaning roller or rollers (C1, C2), such as to pass over effectively their entire axial length before flowing out from one or both the ends of the said tank (V), underneath which there is provided at least one hopper (2) having a form and length such as to collect the solvent which falls from the end or the ends of the said upper tank (V) and any solvent which falls from the bottom of the said tank and said hopper having an internal form such as to discharge the collected material through at least one discharge mouth or duct (102).

5. Device according to Claim 4, **characterized in that** fixed bodies (6) with a substantially U-shaped form in plan view are provided at the ends of the said tank (V), said bodies with their flanges (106 and 206) being able to co-operate with the ends of the parts which form the said tank and are able to form gutters able to channel towards the bottom hopper (2) the liquid which flows out from the ends of the said upper tank (V).

6. Device according to one or more of the preceding claims, **characterized in that** it comprises fixed and/or dynamic scraping means for cleaning the main reverse roller (C1) and/or any secondary reverse roller (C2).

## Patentansprüche

1. Eine walzenbetriebene Vorrichtung zum Reinigen eines Transportbandes (T), mit darauf aufgesprühten flüssigen Substanzen, insbesondere vom unteren Rücklaufbereich (T') des Transportbandes (T) von Maschinen und/oder Anlagen für Lackier-, Färbe- oder Imprägnierungsverfahren, nachstehend der Kürze halber "Lackiermaschinen" genannt, wobei die genannten Vorrichtungen desjenigen Typs sind, welcher mindestens zwei aufeinanderfolgende Rücklaufwalzen (C1, C2) umfasst, die sich jeweils in der gleichen Richtung (F) drehen, so dass die genannten unteren Bereiche (T') des zu reinigenden Transportbandes (T) durch eine entsprechende Gegenbewegung abgeschabt werden, oder welcher jeweils mindestens eine Rücklaufwalze (C1) und mindestens ein darauf folgendes Rakelmesser (7) umfasst, welche jeweils so angeordnet sind, dass sie zwischen sich ein oberes Becken (V) bilden, und welcher Elemente zur Einführung (1) einer entsprechenden Menge Reinigungs-Lösungsmittel in dieses obere Becken (C) umfasst, das Elemente zur Einschränkung der sofortigen Entladung des genannten Lösungsmittels aus dem genannten Becken (V) umfasst, so dass die genannte Rücklaufwalze oder die -genannten Rücklaufwalzen über ihre gesamte axiale Länge mit dem Lösungsmittel benetzt werden, und welches unter den genannten Elementen jeweils einen oder mehrere Trichter (2) zur Rückgewinnung der von ihnen entfernten Farbe und des genannten Lösungsmittels umfasst, wobei das genannte obere Becken (V) im unteren Bereich leicht geöffnet ist, so dass die Teile, aus denen es besteht, insbesondere wenn sie aus Rücklaufwalzen (C1, C2) gebildet werden, nicht mit Gleitwiderstand arbeiten müssen, und wobei die genannte Vorrichtung unterhalb des genannten Beckens (V) jeweils mindestens einen Trichter (2) mit einer solchen Form und Länge umfasst, dass das Lösungsmittel aufgefangen wird, das jeweils vom Ende oder den Enden dieses oberen Beckens (V) herunterläuft, sowie das Lösungsmittel, das zwischen den genannten Reinigungselementen (C1, C2 oder C1, 7) hindurch läuft, und wobei dieser Trichter eine solche innere Form aufweist, dass das aufgefangene Material durch mindestens eine Auslassöffnung oder - Leitung (102) entladen wird, **dadurch gekennzeichnet, dass** mindestens eine schwimmende Walze (3), die durch diejenigen Teile gelagert und zum Rotieren gebracht wird, welche das genannte Becken bilden, nämlich durch die beiden Rücklaufwalzen (C1, C2) beziehungsweise durch die Rücklaufwalze (C1) und das genannte Rakelmesser (7), im Boden des genannten oberen Beckens angeordnet ist, und war alle so, dass diese schwimmende Walze (3) die untere Längsauslassöffnung des genannten Becks (V) senkrecht schließt, welches auf diese Weise eine begrenzte Tiefe aufweisen kann, und wobei das Reinigungs-Lösungsmittel in dieses Becken jeweils durch spezielle Elemente geliefert und anschließend aus einem oder beiden Enden des genannten Beckens (V) ausgelassen wird.

2. Eine Vorrichtung gemäß Anspruch 1, **dadurch gekennzeichnet, dass** sie feststehende Körper (6) umfassen kann, welche beispielsweise aus passendem Kunststoff oder anderem Material mit entsprechend niedrigem Reibungskoeffizient bestehen können, und zwar zur Einschränkung der axialen Bewegungen der genannten schwimmenden Walze (3), so dass die letztere jeweils ausreichend zwischen den Rücklaufwalzen (C1, C2) beziehungsweise der Rücklaufwalze (C1) und dem Rakelmesser (7) zentriert bleibt.

3. Eine Vorrichtung gemäß Anspruch 2, **dadurch gekennzeichnet, dass** die genannten feststehenden Körper (6), falls erforderlich, den Querbereich entsprechender Abflussrinnen bilden können, welche in der Aufsicht eine im wesentliche U-förmige Form aufweisen und mit ihren Flanschen (106 und 206) jeweils mit den Enden der Rücklaufwalzen (C1, C2) beziehungsweise der Rücklaufwalze (C1) und dem Rakelmesser (7) zusammenarbeiten können, um die Flüssigkeit, die aus den Enden des oberen Beckens (V) ausfließt, jeweils zu dem genannten unteren Trichter (2) zu leiten.

4. Eine Vorrichtung gemäß einem oder mehreren der vorausgegangenen Ansprüche, **dadurch gekennzeichnet, dass** das genannte Lösungsmittelbecken (V) an mindestens einem oder beiden Enden offen ist und dass das Lösungsmittel über mindestens ein oder beide Enden dieses Beckens mit Hilfe von mindestens einem Rohr (1) oder einem anderen entsprechenden Element eingeführt wird, welches das Lösungsmittel an einer oder mehreren Stellen auslädt, die jeweils ausreichend entfernt von den Enden des genannten Beckens sind, so dass das Lösungsmittel selbst es schafft, einen Zwischenraum der Breitenausdehnung der genannten Reinigungswalze oder - der genannten Reinigungswalzen (C1, C2) zu benetzen, und war so, dass es effektiv über deren gesamte axiale Länge läuft, bevor es aus einem oder beiden Enden des genannten Beckens (V) fließt, unterhalb dessen jeweils mindestens ein Trichter (2) vorgesehen ist, welcher dabei eine solche Form und Länge aufweist, dass er das Lösungsmittel auffängt, das aus dem Ende beziehungsweise den Enden des genannten oberen Beckens (V) läuft und er das Lösungsmittel auffängt das aus dem Boden des genannten Beckens läuft und wobei der genannte Trichter eine solche innere Form aufweist, dass das aufgefangene Material durch mindestens eine Auslassöffnung oder -Leitung (102) entladen wird.

5. Eine Vorrichtung gemäß Anspruch 4, **dadurch gekennzeichnet, dass** feststehende Körper (6) mit einer in der Aufsicht im wesentlichen U-förmigen Form an den Enden des genannten Beckens (V) vorgesehen sind, wobei die genannten Körper mit ihren Flanschen (106 und 206) in der Lage sind, jeweils mit den Enden der Teile zusammenzuarbeiten, die das genannte Becken bilden und Abflussrinnen entstehen lassen, welche in der Lage sind, die Flüssigkeit, die aus den Enden des genannten oberen Beckens (V) fließt, jeweils in Richtung des unteren Trichters (2) zu leiten.

6. Eine Vorrichtung gemäß einem oder mehreren der vorausgegangenen Ansprüche, **dadurch gekennzeichnet, dass** sie jeweils feststehende und/oder dynamische Schabeelemente zur Reinigung der Hauptrücklaufrolle (C1) und/oder der Nebenrücklaufrolle (C2) umfasst.

## Revendications

1. Dispositif pour nettoyer sur une bande transporteuse (T), entraînée par sur des rouleaux, des substances fluides pulvérisées sur celle-ci, en particulier sur la section de retour inférieure (T') des bandes transporteuses (T) de machines et/ou installations pour des processus de peinture, teinture ou imprégnation, indiquées brièvement ci-dessous comme des « machines de peinture », ledit dispositif étant du type qui comprend au moins deux rouleaux inverses successifs (C1, C2) qui tournent dans la même direction (F) de manière à racler, par le biais d'un mouvement d'opposition, ladite section inférieure (T') du transporteur (T) à nettoyer, ou qui comprend au moins un rouleau inverse (C1) et au moins une racle suivante (7), qui sont agencés de manière à former entre eux un réservoir supérieur (V), et qui comprend des moyens pour introduire (1) une quantité appropriée de solvant de nettoyage dans ce réservoir supérieur (C), qui comprend des moyens pour limiter l'évacuation immédiate dudit solvant hors dudit réservoir (V) de manière que ledit rouleau ou lesdits rouleaux inverses soient mouillés par le solvant sur toute leur longueur axiale et qui comprend, au-dessous desdits moyens, une ou plusieurs trémies (2) pour récupérer la peinture enlevées de ceux-ci et ledit solvant de nettoyage, dans lequel ledit réservoir supérieur (V) est légèrement ouvert dans sa partie inférieure, de manière que les parties qui le forment, en particulier si elles comprennent des rouleaux inverses (C1, C2), n'aient pas à fonctionner ensemble avec un frottement de glissement, et dans lequel ledit dispositif comprend, au-dessous dudit réservoir (V), au moins une trémie (2) avec une forme et une longueur adaptées pour recueillir le solvant qui tombe de l'extrémité ou des extrémités de ce réservoir supérieur (V) et le solvant qui passe entre lesdits moyens de nettoyage (C1, C2 ou C1, 7) et cette trémie étant pourvue d'une forme interne adaptée pour décharger la matière recueillie à travers au moins une embouchure ou un conduit de décharge (102), **caractérisé en ce qu'**au moins un rouleau flottant (3), qui est supporté et entraîné en rotation par les parties qui forment ledit réservoir, précisément par les deux rouleaux inverses (C1, C2) ou par le rouleau inverse (C1) et par ladite racle (7), est agencé dans le fond dudit réservoir supérieur, le tout de manière que ce rouleau flottant (3) ferme verticalement la sortie de décharge inférieure longitudinale dudit réservoir (V) qui, de cette manière, peut avoir une profondeur limitée, le solvant de nettoyage étant délivré dans ce réservoir par des moyens spéciaux et déchargé ensuite à partir d'une ou des deux extrémités dudit réservoir (V).

2. Dispositif selon la revendication 1, **caractérisé en ce qu'**il peut comprendre des corps fixes (6) réalisés par exemple en matière plastique ou autre matériau approprié avec un faible coefficient de frottement, pour limiter les mouvements axiaux dudit rouleau flottant (3) de manière que ce dernier reste suffisamment centré entre les rouleaux inverses (C1, C2) ou entre le rouleau inverse (C1) et la racle (7).

3. Dispositif selon la revendication 2, **caractérisé en ce que** lesdits corps fixes (6) peuvent, si nécessaire, former la partie transversale de rigoles qui, en vue en plan, ont une forme sensiblement en U et qui, avec leurs brides (106 et 206), peuvent coopérer avec les extrémités des rouleaux inverses (C1, C2) ou du rouleau inverse (C1) et de la racle (7), de manière à canaliser vers ladite trémie inférieure (2) le liquide qui s'écoule en sortie à partir des extrémités du réservoir supérieur (V).

4. Dispositif selon une ou plusieurs des revendications précédentes, **caractérisé en ce que** ledit réservoir de solvant (V) est ouvert au niveau d'au moins une ou des deux extrémités et **en ce que** le solvant est introduit via au moins une ou les deux extrémités de ce réservoir au moyen d'au moins un tube (1) ou autre moyen approprié qui décharge le solvant dans une ou plusieurs positions suffisamment éloignées des extrémités dudit réservoir de manière que le solvant lui-même réussisse à mouiller un espace intermédiaire de l'extension transversale dudit rouleau ou desdits rouleaux de nettoyage (C1, C2), de manière à passer efficacement sur toute leur longueur axiale avant de s'écouler en sortie à partir d'une ou des deux extrémités dudit réservoir (V), au-dessous duquel est disposée au moins une trémie (2) ayant une forme et une longueur adaptées pour recueillir le solvant qui tombe de l'extrémité ou des extrémités dudit réservoir supérieur (V) et tout solvant qui tombe à partir du fond dudit réservoir et ladite trémie ayant une forme interne adaptée pour décharger la matière recueillie à travers au moins une embouchure ou un conduit de décharge (102).

5. Dispositif selon la revendication 4, **caractérisé en ce que** des corps fixes (6) avec une forme sensiblement en U en vue en plan sont disposés aux extrémités dudit réservoir (V), lesdits corps, avec leurs brides (106 et 206), étant adaptés pour coopérer avec les extrémités des parties qui forment ledit réservoir et sont adaptés pour former des rigoles adaptées pour canaliser vers la trémie inférieure (2) le liquide qui s'écoule en sortie à partir des extrémités dudit réservoir supérieur (V).

6. Dispositif selon une ou plusieurs des revendications précédentes, **caractérisé en ce qu'**il comprend des moyens de raclage fixes et/ou dynamiques pour nettoyer le rouleau inverse principal (C1) et/ou n'importe quel rouleau inverse secondaire (C2).
